# EUROPEAN PATENT APPLICATION

(11) **EP 2 993 563 A1**
(43) Date of publication of application: **09.03.2016**
(21) Application number: 15179799.0
(22) Date of filing: 05.08.2015
(51) Int. Cl.: G06F 3/041, G06F 3/044

(54) **TOUCH PIXEL DESIGN FOR REDUCING VISUAL ARTIFACTS**

(30) Priority: 02.09.2014 US 201414475368
(71) Applicant: APPLE INC., Cupertino, CA 95014 (US)
(72) Inventor: PEDDER, James Edward Alexander, Cupertino, CA, 95014 (US); SHIH, David H.C., Cupertino, CA, 95014 (US); GRUNTHANER, Martin Paul, Cupertino, CA, 95014 (US); HOTELLING, Steven Porter, Cupertino, CA, 95014 (US)
(74) Representative: Lang, Johannes

(57) **Abstract**

A touch sensor panel is disclosed. In some examples, the touch sensor panel comprises a first touch pixel electrode formed in a first layer, the first touch pixel electrode comprising a plurality of electrically coupled touch pixel segments separated by one or more touch pixel gaps. In some examples, the touch sensor panel comprises a sense connection formed in the first layer and coupled to the first touch pixel electrode, the sense connection configured to couple the first touch pixel electrode to sense circuitry. In some examples, the touch pixel segments and the touch pixel gaps are configured to provide optical uniformity on the touch sensor panel.

## Description

### Field of the Disclosure

This relates generally to touch sensor panels, and more particularly to touch pixel designs for reducing visual artifacts on a touch screen.

### Background of the Disclosure

Many types of input devices are presently available for performing operations in a computing system, such as buttons or keys, mice, trackballs, joysticks, touch sensor panels, touch screens and the like. Touch screens, in particular, are becoming increasingly popular because of their ease and versatility of operation as well as their declining price. Touch screens can include a touch sensor panel, which can be a clear panel with a touch-sensitive surface, and a display device such as a liquid crystal display (LCD) that can be positioned partially or fully behind the panel so that the touch-sensitive surface can cover at least a portion of the viewable area of the display device. Touch screens can allow a user to perform various functions by touching the touch sensor panel using a finger, stylus or other object at a location often dictated by a user interface (UI) being displayed by the display device. In general, touch screens can recognize a touch and the position of the touch on the touch sensor panel, and the computing system can then interpret the touch in accordance with the display appearing at the time of the touch, and thereafter can perform one or more actions based on the touch. In the case of some touch sensing systems, a physical touch on the display is not needed to detect a touch. For example, in some capacitive-type touch sensing systems, fringing electrical fields used to detect touch can extend beyond the surface of the display, and objects approaching near the surface may be detected near the surface without actually touching the surface.

Capacitive touch sensor panels can be formed by a matrix of substantially transparent conductive plates made of materials such as Indium Tin Oxide (ITO). It is due in part to their substantial transparency that capacitive touch sensor panels can be overlaid on a display to form a touch screen, as described above. Some touch screens can be formed by partially integrating touch sensing circuitry into a display pixel stackup (i.e., the stacked material layers forming the display pixels).

### Summary of the Disclosure

Some capacitive touch sensor panels can be formed by a matrix of substantially transparent conductive plates made of materials such as Indium Tin Oxide (ITO), and some touch screens can be formed by partially integrating touch sensing circuitry into a display pixel stackup (i.e., the stacked material layers forming the display pixels). The layout of the transparent conductive plates (e.g., touch pixels, or touch electrodes) on the touch screen can cause certain visual artifacts to appear on the touch screen. For example, regions outside of the touch pixels can have different ITO coverage than regions inside the touch pixels. Further, the edges of touch pixels can cause optical interference with the edges of display pixels that may exist in a layer of the touch screen that is below the touch pixels. These layout characteristics can cause various visual artifacts on the touch screen. The examples of the disclosure provide various techniques for reducing such visual artifacts. In some examples, the ITO coverage in different regions of the touch screen is substantially equalized. In some examples, the edges of touch pixels and other features on the touch screen are designed to be non-linear to reduce optical interference with display pixels that may exist below the touch pixels.

### Brief Description of the Drawings

Figs. 1A-1D illustrate an example mobile telephone, an example media player, an example personal computer and an example tablet computer that can each include an exemplary touch screen according to examples of the disclosure.
Fig. 2 is a block diagram of an example computing system that illustrates one implementation of an example touch screen according to examples of the disclosure.
Fig. 3A illustrates an exemplary touch sensor circuit corresponding to a self-capacitance touch pixel electrode and sensing circuit according to examples of the disclosure.
Fig. 3B illustrates an example configuration in which common electrodes can form portions of the touch sensing circuitry of a touch sensing system.
Fig. 4 illustrates an exemplary configuration for electrically connecting touch pixels in a touch screen to sense channels according to examples of the disclosure.
Fig. 5 illustrates an exemplary touch screen routing configuration in which sense connections can be in the same layer of the touch screen as touch pixels according to examples of the disclosure.
Fig. 6 illustrates a first modified layout of a region of the touch screen in Fig. 5 according to examples of the disclosure.
Fig. 7 illustrates a second modified layout of a region of the touch screen in Fig. 5 according to examples of the disclosure.
Fig. 8 illustrates a third modified layout of a region of the touch screen in Fig. 5 according to examples of the disclosure.
Fig. 9 illustrates a fourth modified layout of a region of the touch screen in Fig. 5 according to examples of the disclosure.
Fig. 10 illustrates another exemplary touch screen routing configuration according to examples of the disclosure.

### Detailed Description

In the following description of examples, reference is made to the accompanying drawings which form a part hereof, and in which it is shown by way of illustration specific examples that can be practiced. It is to be understood that other examples can be used and structural changes can be made without departing from the scope of the disclosed examples.

Some capacitive touch sensor panels can be formed by a matrix of substantially transparent conductive plates made of materials such as Indium Tin Oxide (ITO), and some touch screens can be formed by partially integrating touch sensing circuitry into a display pixel stackup (i.e., the stacked material layers forming the display pixels). The layout of the transparent conductive plates (e.g., touch pixels, or touch electrodes) on the touch screen can cause certain visual artifacts to appear on the touch screen. For example, regions outside of the touch pixels can have different ITO coverage than regions inside the touch pixels. Further, the edges of touch pixels can cause optical interference with the edges of display pixels that may exist in a layer of the touch screen that is below the touch pixels. These layout characteristics can cause various visual artifacts on the touch screen. The examples of the disclosure provide various techniques for reducing such visual artifacts. In some examples, the ITO coverage in different regions of the touch screen is substantially equalized. In some examples, the edges of touch pixels and other features on the touch screen are designed to be non-linear to reduce optical interference with display pixels that may exist below the touch pixels.

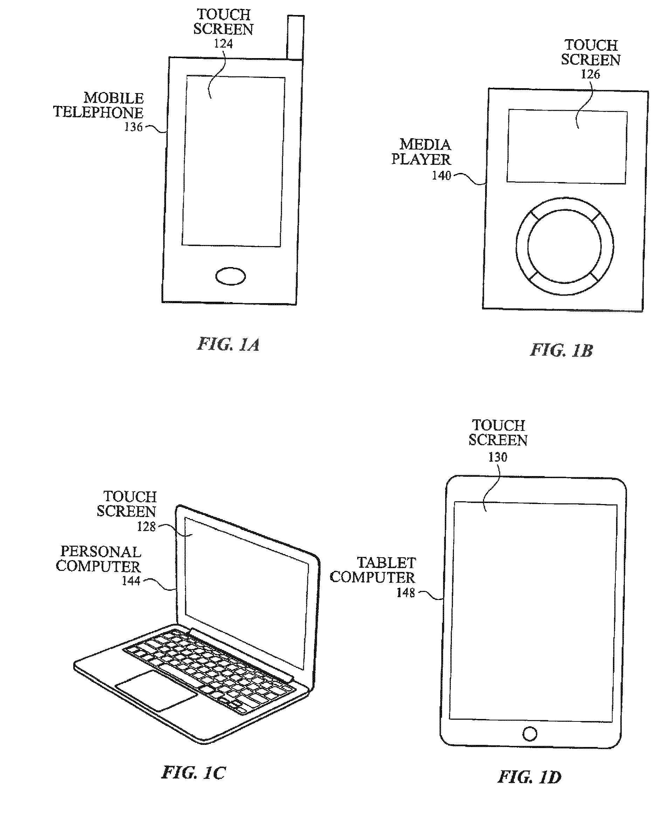

Figs. 1A-1D show example systems in which a touch screen according to examples of the disclosure may be implemented. Fig. 1A illustrates an example mobile telephone 136 that includes a touch screen 124. Fig. 1B illustrates an example digital media player 140 that includes a touch screen 126. Fig. 1C illustrates an example personal computer 144 that includes a touch screen 128. Fig. 1D illustrates an example tablet computer 148 that includes a touch screen 130. It is understood that the above touch screens can be implemented in other devices as well, including in wearable devices.

In some examples, touch screens 124, 126, 128 and 130 can be based on self-capacitance. A self-capacitance based touch system can include a matrix of small plates of conductive material that can be referred to as a touch pixel or a touch pixel electrode. For example, a touch screen can include a plurality of touch pixels, each touch pixel corresponding to a particular location on the touch screen at which touch or proximity (i.e., a touch or proximity event) is to be sensed. Such a touch screen can be referred to as a pixelated self-capacitance touch screen. During operation, the touch pixel can be stimulated with an AC waveform, and the self-capacitance of the touch pixel can be measured. As an object approaches the touch pixel, the self-capacitance of the touch pixel can change. This change in the self-capacitance of the touch pixel can be detected and measured by the touch sensing system to determine the positions of multiple objects when they touch, or come in proximity to, the touch screen.

In some examples, touch screens 124, 126, 128 and 130 can be based on mutual capacitance. A mutual capacitance based touch system can include, for example, drive regions and sense regions, such as drive lines and sense lines. For example, drive lines can be formed in rows while sense lines can be formed in columns (e.g., orthogonal). Touch pixels can be formed at the intersections of the rows and columns. During operation, the rows can be stimulated with an AC waveform and a mutual capacitance can be formed between the row and the column of the touch pixel. As an object approaches the touch pixel, some of the charge being coupled between the row and column of the touch pixel can instead be coupled onto the object. This reduction in charge coupling across the touch pixel can result in a net decrease in the mutual capacitance between the row and the column and a reduction in the AC waveform being coupled across the touch pixel. This reduction in the charge-coupled AC waveform can be detected and measured by the touch sensing system to determine the positions of multiple objects when they touch the touch screen. In some examples, a touch screen can be multi-touch, single touch, projection scan, full-imaging multi-touch, capacitive touch, etc.

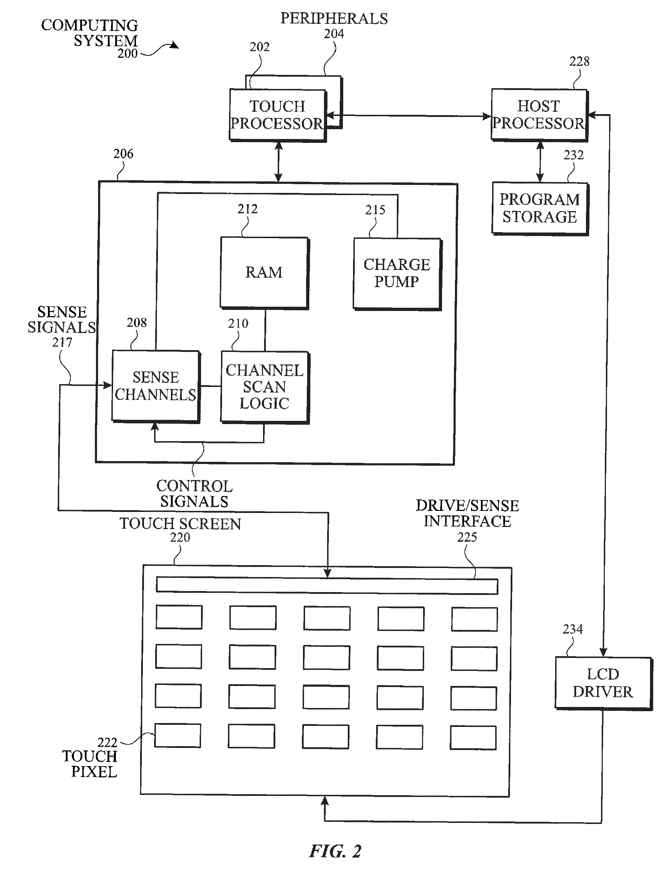

Fig. 2 is a block diagram of an example computing system 200 that illustrates one implementation of an example touch screen 220 according to examples of the disclosure. Computing system 200 can be included in, for example, mobile telephone 136, digital media player 140, personal computer 144, tablet computer 148, or any mobile or non-mobile computing device that includes a touch screen, including a wearable device. Computing system 200 can include a touch sensing system including one or more touch processors 202, peripherals 204, a touch controller 206, and touch sensing circuitry (described in more detail below). Peripherals 204 can include, but are not limited to, random access memory (RAM) or other types of memory or storage, watchdog timers and the like. Touch controller 206 can include, but is not limited to, one or more sense channels 208 and channel scan logic 210. Channel scan logic 210 can access RAM 212, autonomously read data from sense channels 208 and provide control for the sense channels. In addition, channel scan logic 210 can control sense channels 208 to generate stimulation signals at various frequencies and phases that can be selectively applied to the touch pixels of touch screen 220, as described in more detail below. In some examples, touch controller 206, touch processor 202 and peripherals 204 can be integrated into a single application specific integrated circuit (ASIC), and in some examples can be integrated with touch screen 220 itself.

Touch screen 220 can be a self-capacitance touch screen, and can include touch sensing circuitry that can include a capacitive sensing medium having a plurality of touch pixels 222 (e.g., a pixelated self-capacitance touch screen). Although the examples of the disclosure are described in the context of a self-capacitance touch screen, it is understood that the scope of the disclosure similarly extends to other types of touch screens; e.g., mutual capacitance touch screens having drive and/or sense regions. Touch pixels 222 can be coupled to sense channels 208 in touch controller 206, can be driven by stimulation signals from the sense channels through drive/sense interface 225, and can be sensed by the sense channels through the drive/sense interface as well, as described above. Labeling the conductive plates used to detect touch (i.e., touch pixels 222) as "touch pixels" can be particularly useful when touch screen 220 is viewed as capturing an "image" of touch. In other words, after touch controller 206 has determined an amount of touch detected at each touch pixel 222 in touch screen 220, the pattern of touch pixels in the touch screen at which a touch occurred can be thought of as an "image" of touch (e.g., a pattern of fingers touching the touch screen).

Computing system 200 can also include a host processor 228 for receiving outputs from touch processor 202 and performing actions based on the outputs. For example, host processor 228 can be connected to program storage 232 and a display controller, such as an LCD driver 234. The LCD driver 234 can provide voltages on select (gate) lines to each pixel transistor and can provide data signals along data lines to these same transistors to control the pixel display image as described in more detail below. Host processor 228 can use LCD driver 234 to generate an image on touch screen 220, such as an image of a user interface (UI), and can use touch processor 202 and touch controller 206 to detect a touch on or near touch screen 220. The touch input can be used by computer programs stored in program storage 232 to perform actions that can include, but are not limited to, moving an object such as a cursor or pointer, scrolling or panning, adjusting control settings, opening a file or document, viewing a menu, making a selection, executing instructions, operating a peripheral device connected to the host device, answering a telephone call, placing a telephone call, terminating a telephone call, changing the volume or audio settings, storing information related to telephone communications such as addresses, frequently dialed numbers, received calls, missed calls, logging onto a computer or a computer network, permitting authorized individuals access to restricted areas of the computer or computer network, loading a user profile associated with a user's preferred arrangement of the computer desktop, permitting access to web content, launching a particular program, encrypting or decoding a message, and/or the like. Host processor 228 can also perform additional functions that may not be related to touch processing.

Note that one or more of the functions described herein, including the configuration and operation of electrodes and sense channels, can be performed by firmware stored in memory (e.g., one of the peripherals 204 in Fig. 2) and executed by touch processor 202, or stored in program storage 232 and executed by host processor 228. The firmware can also be stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "non-transitory computer-readable storage medium" can be any medium (excluding signals) that can contain or store the program for use by or in connection with the instruction execution system, apparatus, or device. The computer-readable storage medium can include, but is not limited to, an electronic, magnetic, optical, electromagnetic, infrared, or semiconductor system, apparatus or device, a portable computer diskette (magnetic), a random access memory (RAM) (magnetic), a read-only memory (ROM) (magnetic), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

The firmware can also be propagated within any transport medium for use by or in connection with an instruction execution system, apparatus, or device, such as a computer-based system, processor-containing system, or other system that can fetch the instructions from the instruction execution system, apparatus, or device and execute the instructions. In the context of this document, a "transport medium" can be any medium that can communicate, propagate or transport the program for use by or in connection with the instruction execution system, apparatus, or device. The transport medium can include, but is not limited to, an electronic, magnetic, optical, electromagnetic or infrared wired or wireless propagation medium.

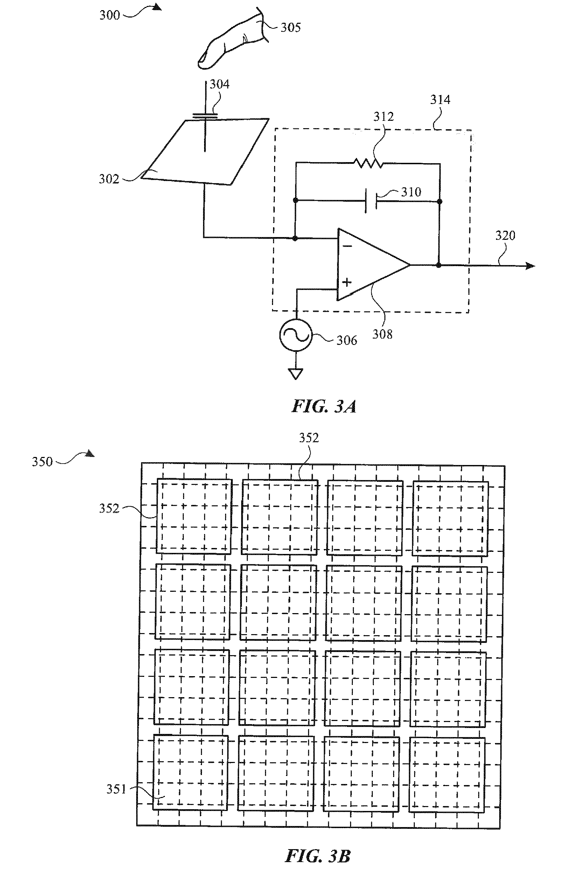

Fig. 3A illustrates an exemplary touch sensor circuit 300 corresponding to a self-capacitance touch pixel electrode 302 and sensing circuit 314 according to examples of the disclosure. Touch pixel electrode 302 can correspond to touch pixel 222. Touch pixel electrode 302 can have an inherent self-capacitance to ground associated with it, and also an additional self-capacitance to ground that is formed when an object, such as finger 305, is in proximity to or touching the electrode. The total self-capacitance to ground of touch pixel electrode 302 can be illustrated as capacitance 304. Touch pixel electrode 302 can be coupled to sensing circuit 314 (which can correspond to sense channels 208). Sensing circuit 314 can include an operational amplifier 308, feedback resistor 312, feedback capacitor 310 and an input voltage source 306, although other configurations can be employed. For example, feedback resistor 312 can be replaced by a switched capacitor resistor in order to minimize any parasitic capacitance effect caused by a variable feedback resistor. Touch pixel electrode 302 can be coupled to the inverting input of operational amplifier 308. An AC voltage source 306 (Vac) can be coupled to the non-inverting input of operational amplifier 308. Touch sensor circuit 300 can be configured to sense changes in the total self-capacitance 304 of the touch pixel electrode 302 induced by a finger or object either touching or in proximity to the touch sensor panel. Output 320 can be used by a processor (e.g., touch controller 206) to determine the presence of a proximity or touch event, or the output can be inputted into a discrete logic network to determine the presence of a touch or proximity event. Touch sensor circuit 300 can represent the structure and/or operation of touch pixel sensing of the examples of the disclosure.

In some examples, touch screen 220 can be an integrated touch screen in which touch sensing circuit elements of the touch sensing system can be integrated into the display pixel stackups of a display. The circuit elements in touch screen 220 can include, for example, elements that can exist in LCD or other displays (e.g., OLED displays), such as one or more pixel transistors (e.g., thin film transistors (TFTs)), gate lines, data lines, pixel electrodes and common electrodes. In any given display pixel, a voltage between a pixel electrode and a common electrode can control a luminance of the display pixel. The voltage on the pixel electrode can be supplied by a data line through a pixel transistor, which can be controlled by a gate line. It is noted that circuit elements are not limited to whole circuit components, such as a whole capacitor, a whole transistor, etc., but can include portions of circuitry, such as only one of the two plates of a parallel plate capacitor. Fig. 3B illustrates an example configuration in which common electrodes 352 can form portions of the touch sensing circuitry of a touch sensing system-in some examples of this disclosure, the common electrodes can form touch pixels used to detect an image of touch on touch screen 350, as described above. Each common electrode 352 (i.e., touch pixel) can include a plurality of display pixels 351, and each display pixel 351 can include a portion of a common electrode 352, which can be a circuit element of the display system circuitry in the display pixel stackup (i.e., the stacked material layers forming the display pixels) of the display pixels of some types of LCD or other displays that can operate as part of the display system to display an image.

In the example shown in Fig. 3B, each common electrode 352 can serve as a multi-function circuit element that can operate as display circuitry of the display system of touch screen 350 and can also operate as touch sensing circuitry of the touch sensing system. In this example, each common electrode 352 can operate as a common electrode of the display circuitry of the touch screen 350, as described above, and can also operate as touch sensing circuitry of the touch screen. For example, a common electrode 352 can operate as a capacitive part of a touch pixel of the touch sensing circuitry during the touch sensing phase. Other circuit elements of touch screen 350 can form part of the touch sensing circuitry by, for example, switching electrical connections, etc. More specifically, in some examples, during the touch sensing phase, a gate line can be connected to a power supply, such as a charge pump, that can apply a voltage to maintain TFTs in display pixels included in a touch pixel in an "off" state. Stimulation signals can be applied to common electrode 352. Changes in the total self-capacitance of common electrode 352 can be sensed through an operational amplifier, as previously discussed. The change in the total self-capacitance of common electrode 352 can depend on the proximity of a touch object, such as a finger, to the common electrode. In this way, the measured change in total self-capacitance of common electrode 352 can provide an indication of touch on or near the touch screen.

In general, each of the touch sensing circuit elements may be either a multi-function circuit element that can form part of the touch sensing circuitry and can perform one or more other functions, such as forming part of the display circuitry, or may be a single-function circuit element that can operate as touch sensing circuitry only. Similarly, each of the display circuit elements may be either a multi-function circuit element that can operate as display circuitry and perform one or more other functions, such as operating as touch sensing circuitry, or may be a single-function circuit element that can operate as display circuitry only. Therefore, in some examples, some of the circuit elements in the display pixel stackups can be multi-function circuit elements and other circuit elements may be single-function circuit elements. In other examples, all of the circuit elements of the display pixel stackups may be single-function circuit elements.

In addition, although examples herein may describe the display circuitry as operating during a display phase, and describe the touch sensing circuitry as operating during a touch sensing phase, it should be understood that a display phase and a touch sensing phase may be operated at the same time, e.g., partially or completely overlap, or the display phase and touch sensing phase may operate at different times. Also, although examples herein describe certain circuit elements as being multi-function and other circuit elements as being single-function, it should be understood that the circuit elements are not limited to the particular functionality in other examples. In other words, a circuit element that is described in one example herein as a single-function circuit element may be configured as a multi-function circuit element in other examples, and vice versa.

The common electrodes 352 (i.e., touch pixels) and display pixels 351 of Fig. 3B are shown as rectangular or square regions on touch screen 350. However, it is understood that the common electrodes 352 and display pixels 351 are not limited to the shapes, orientations, and positions shown, but can include any suitable configurations according to examples of the disclosure.

While the discussion in this disclosure focuses on touch screens, it is understood that some or all of the examples of the disclosure can similarly be implemented in a touch sensor panel (i.e., a panel having touch sensing circuitry without display circuitry). For brevity, however, the examples of the disclosure have been, and will be, described in the context of a touch screen.

As described above, the self-capacitance of each touch pixel (e.g., touch pixel 222) in the touch screen of the disclosure can be sensed to capture an image of touch across the touch screen. To allow for the sensing of the self-capacitance of individual touch pixels, it can be necessary to route one or more electrical connections between each of the touch pixels and the touch sensing circuitry (e.g., sense channels 208) of the touch screen. It should be noted that although the examples of the disclosure are presented in the context of connecting touch pixels to sense channels, it is understood that the techniques described can be utilized in other contexts involving connections to touch screen components (e.g., connecting mutual capacitance drive lines to drive circuitry).

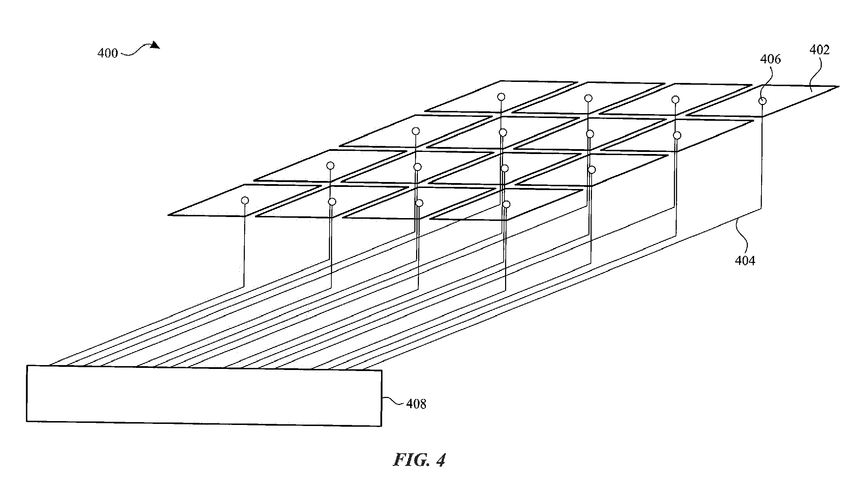

Fig. 4 illustrates an exemplary configuration for electrically connecting touch pixels 402 in touch screen 400 to sense channels 408 according to examples of the disclosure. In some examples, sense channels 408 can be located in a touch controller separate from the touch screen, but in some examples, the sense channels can be located on the touch screen. Touch screen 400 can include touch pixels 402, as described above. Components of touch screen 400 other than touch pixels 402 are not illustrated for ease of description. Each of touch pixels 402 can be electrically connected to sense channels 408 through sense connections 404 and connection points 406. In some examples, sense connections 404 can connect touch pixels 402 to a location on the touch screen (e.g., a flex circuit connection area) from which a separate connection (e.g., a flex circuit) can complete the connection to sense channels 408 (e.g., when the sense channels are located separate from touch screen 400). In some examples, sense connections 404 can connect touch pixels 402 directly to sense channels 408 (e.g., when the sense channels are located on touch screen 400). In some examples, connection points 406 can be vias when sense connections 404 and touch pixels 402 reside in different layers of touch screen 400 (e.g., when the sense connections reside underneath the touch pixels, or when the sense connections reside on top of the touch pixels). In such examples, connection points 406 can allow for an electrical connection between touch pixels 402 and sense connections 404 through one or more intervening layers that may exist between the touch pixels and the sense connections in touch screen 400. It is understood, that in some examples, sense connections 404 and touch pixels 402 can reside in the same layer of touch screen 400 (e.g., in the same ITO layer), and connection points 406 can simply represent electrical coupling of the sense connections and the touch pixels.

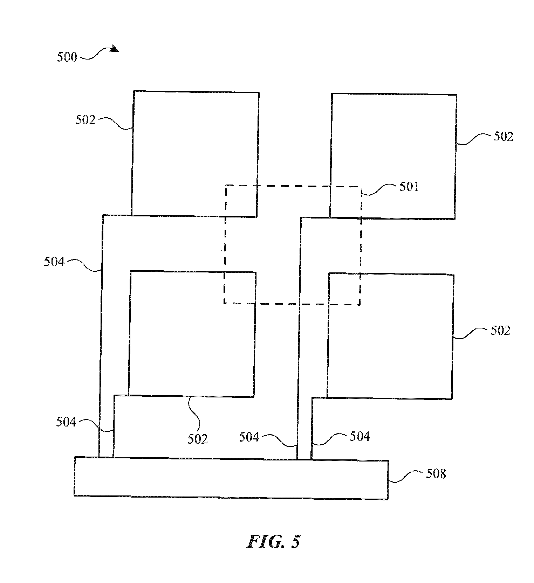

Fig. 5 illustrates an exemplary touch screen 500 routing configuration in which sense connections 504 can be in the same layer of the touch screen as touch pixels 502 according to examples of the disclosure. Fig. 5 can illustrate touch screen 500 having four touch pixels 502, though it is understood that aspects of the examples described can similarly extend to touch screens with more than four touch pixels. Touch pixels 502 and sense connections 504 can be formed of the same process layer (e.g., the same ITO layer).

Touch pixels 502 can be electrically coupled to sense channels 508 by sense connections 504. In some examples, sense connections 504 can be disposed between columns of touch pixels 502, as illustrated. In some examples, all of the sense connections 504 disposed between adjacent columns of touch pixels 502 can be coupled to touch pixels in only one of the adjacent columns of touch pixels. In some examples, the sense connections 504 disposed between adjacent columns of touch pixels 502 can be coupled to one or more touch pixels in both of the adjacent columns of touch pixels. In some examples, sense connections 504 can be disposed in an active area of touch screen 500 or touch sensor panel (i.e., an area of the touch screen/touch sensor panel in which a display associated with the touch screen/touch sensor panel displays an image).

In the example illustrated in Fig. 5, material (e.g., ITO) coverage and layouts in touch pixel 502 regions (e.g., regions of touch screen 500 within the touch pixels), sense connection 504 regions (e.g., regions of the touch screen between horizontally-separated touch pixels where the sense connections can be disposed), and other regions between the touch pixels (e.g., regions of the touch screen between vertically-separated touch pixels) can differ. For example, touch pixel 502 regions can have substantially 100% material coverage, sense connection 504 regions can have varying material coverage that can be less than 100% depending on the number of sense connections 504 in the regions, and other regions between the touch pixels can have substantially 0% material coverage. Such differences in material coverage can cause visual artifacts on touch screen 500. Further, in some examples, because touch pixels 502 and sense connections 504 can be overlaid on a substantially regular grid of display pixels (e.g., a substantially regular grid of red, green, blue display pixels) to form a touch screen, the substantially linear edges of the touch pixels and the sense connections can cause moire interference patterns with the underlying display pixels; such moire interference patterns can present themselves on touch screen 500 as visual artifacts. Thus, it can be beneficial to increase material coverage uniformity across touch screen 500, as well as reduce substantially linear edges in the touch pixel 502 and sense connection 504 layouts, to reduce visual artifacts on the touch screen and increase optical performance of the touch screen. At the same time, electrical performance, which can be a function of material coverage (e.g., more material coverage can reduce the sheet resistance of the material, which can be beneficial for various touch sensing or display functionalities of touch screen 500), can be balanced with optical performance.

The discussion that follows provides some techniques for increasing the optical performance of touch screen 500 while maintaining satisfactory electrical performance of the touch screen. These techniques will be described with reference to region 501 of touch screen 500, though it is understood that the techniques can be extended to other regions of the touch screen as well. Further, as stated above, though the examples in the disclosure are described in the context of a pixelated self-capacitance touch screen, it is understood that the scope of the disclosure is not so limited-the examples described below can similarly be implemented in other types of self-capacitance touch screens, as well as in mutual capacitance touch screens having drive and sense electrodes. Specifically, the examples of the disclosure can be implemented in drive electrodes and/or sense electrodes.

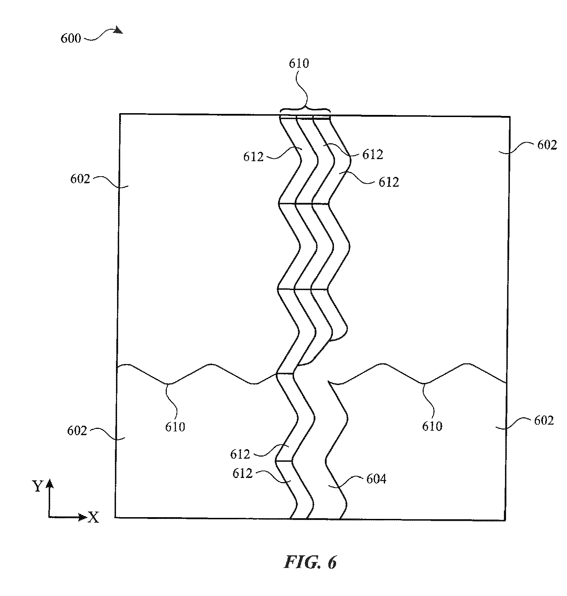

Fig. 6 illustrates a first modified layout of region 501 of touch screen 500 in Fig. 5 according to examples of the disclosure. It is understood that one or more aspects of the discussion provided below with respect to the illustrated portion of touch screen 600 can be extended to other regions of the touch screen. Touch pixels 602 (top-left, top-right, bottom-left, bottom-right) can correspond to touch pixels 502. Touch pixels 602 can be separated by regions 610. Regions 610 can comprise one or more gaps in material (e.g., ITO) of which touch pixels 602 can be formed. In some examples, regions 610 between horizontally-separated touch pixels 602 can comprise two or more gaps, and regions 610 between vertically-separated touch pixels can comprise a single gap. Regions 610 between horizontally-separated touch pixels 602 can include dummy material 612. Dummy material 612 can be formed of the same material that forms touch pixels 602. Dummy material 612 can have a layout similar to sense connection 604 and touch pixels 602. For example, the shapes of dummy material 612 can substantially mirror (e.g., have substantially the same shape, have substantially the same pattern, and/or have substantially the same curvature) the pattern of the edges of touch pixels 602 and sense connection 604 so as to visually blend in with the touch pixels and the sense connection. Dummy material 612 can be made up of segments of material (dummy material segments) separated by one or more gaps of material. The distance between any point on one dummy material segment (e.g., center) and a corresponding point on another dummy material segment (e.g., center) can be referred to as dummy material segment pitch. The existence of dummy material 612 in regions 610 can increase material coverage in those regions so as to reduce the disparity in material coverage with respect to sense connection 604 and touch pixel 602 regions on touch screen 600. Thus, visual artifacts resulting from material coverage disparities can be reduced.

Regions 610 between vertically-separated touch pixels 602 can be smaller than regions 610 between horizontally-separated touch pixels, because regions 610 between horizontally-separated touch pixels may encompass sense connection 604 (and possibly other sense connections). Sense connection 604 can couple the top-right touch pixel 602 to, for example, sense circuitry (e.g., sense channels 508, not illustrated).

To reduce moire interference with display pixels that may be disposed below touch pixels 602, sense connection 604 and dummy material 612 in touch screen 600, the edges of the touch pixels, the sense connection and the dummy material can be substantially non-linear. In some examples, the edges of touch pixels 602, sense connection 604 and dummy material 612 can have a periodic non-linear design/profile. In the illustrated example, the edges of touch pixels 602, sense connection 604 and dummy material 612 can have a sinusoidal design, though it is understood that other designs are contemplated. For example, the edges of touch pixels 602, sense connection 604 and dummy material 612 can have a periodic, pseudo-linear, zigzag design.

In some examples, the maximum angle(s) of the edges of touch pixels 602, sense connection 604 and dummy material 612 with respect to any orthogonal axes of the display pixel layout below can be at least 30 degrees off axis. For example, if the display pixels are arranged according to the x- and y-axes illustrated, in some examples, the maximum angle(s) of the top and/or bottom edges of touch pixels 602 can be at least 30 degrees with respect to the x-axis, and the maximum angle(s) of the right and/or left edges of the touch pixels and sense connection 604 can be at least 30 degrees with respect to the y-axis. In some examples, the pitch and/or amplitude of the design of the edges of touch pixels 602 and sense connection 604 can be based on the display pixel layout below (e.g., based on the sizes of the display pixels, the spacing of the display pixels, the shapes of the display pixels, etc.).

The widths of the gaps in material between various ones of touch pixels 602, sense connection 604 and dummy material 612 can be substantially constant across touch screen 600. For example, the widths of the gaps between dummy material 612 can be substantially the same as the width of the gap between vertically-separated touch pixels 602. In some examples, the gaps in material can be the minimum gaps allowed by the process(es) used to fabricate touch screen 600 ("minimum process width gaps").

As compared to the layout of touch screen 500 in Fig. 5, the layout of touch screen 600 in Fig. 6 can reduce moire interference as well as visual artifacts due to material coverage disparities that may exist across the touch screen. However, material coverage in touch pixel 602 regions and sense connection 604 regions can remain substantially different than material coverage in regions 610 of touch screen 600.

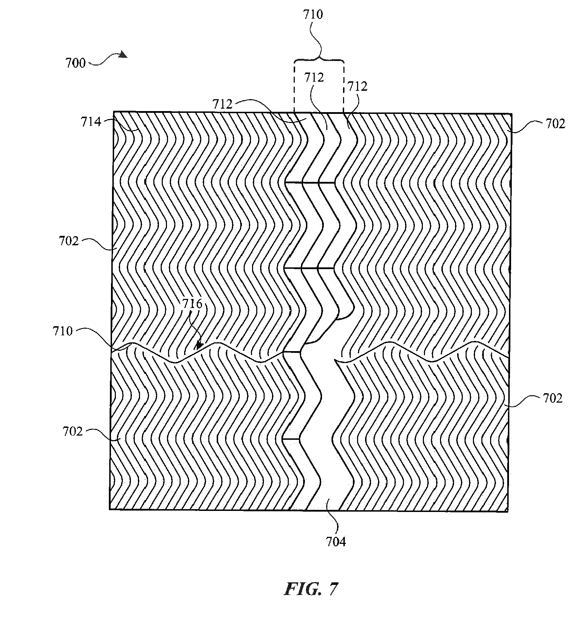

Fig. 7 illustrates a second modified layout of region 501 of touch screen 500 in Fig. 5 according to examples of the disclosure. The touch pixel 702 and sense connection 704 layout of Fig. 7 can be substantially that of Fig. 6. However, gaps 714 can be formed in (or added to) the material of touch pixels 702 to reduce the material coverage in the touch pixel regions of touch screen 700; as a result, the level of material coverage in the touch pixel regions can approach the level of material coverage in regions 710. The gaps formed in touch pixels 702 can substantially mirror (e.g., have substantially the same shape, have substantially the same pattern, and/or have substantially the same curvature) the patterns of the edges of the touch pixels, the dummy material 712, and sense connection 704 to maintain layout uniformity across touch screen 700. The gaps in touch pixels 702 can exist substantially throughout the entirety of the touch pixels, except for a specified region in the touch pixels (in this case, along the top and/or bottom edges of the touch pixels)-these specified regions (e.g., region 716) can electrically couple together the various segments of material (touch pixel segments) that can exist across each touch pixel to allow for proper touch pixel and/or touch screen operation. The distance between any point on one touch pixel segment (e.g., center) and a corresponding point on another touch pixel segment (e.g., center) can be referred to as touch pixel segment pitch.

As compared to the layout of touch screen 600 in Fig. 6, the layout of touch screen 700 in Fig. 7 can reduce visual artifacts due to material coverage disparities that may exist across the touch screen, because the level of material coverage in touch pixel 702 regions can approach the level of material coverage in regions 710. However, the sheet resistance of touch pixel 702 regions can be substantially increased due to only a few specified regions (e.g., region 716) electrically coupling various portions of the touch pixels together.

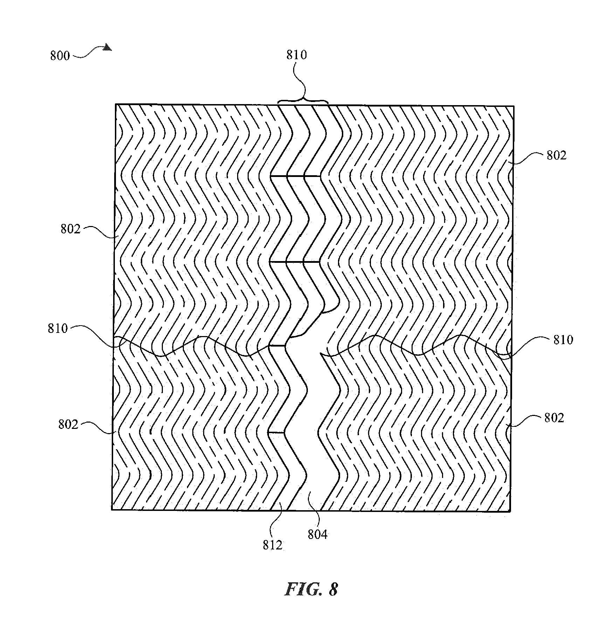

Fig. 8 illustrates a third modified layout of region 501 of touch screen 500 in Fig. 5 according to examples of the disclosure. The touch pixel 802 and sense connection 804 layout of Fig. 8 can be substantially that of Fig. 7. However, as stated above, because only specified regions of touch pixels 702 can allow for electrical coupling between all of the segments of the touch pixels, in some examples, the sheet resistance of the touch pixels can be too large. To reduce the sheet resistance of touch pixels 802, the gaps that may exist in the touch pixels can be partitioned, as illustrated in Fig. 8-stated differently, links between segments of material can be added at various positions across the touch pixels to electrically couple the segments of the touch pixels together. In some examples, placement of these partitions/links can be random. In some examples, placement of these partitions/links need not be random. These links can allow for distributed and repetitive electrical coupling between segments of material across touch pixels 802. This can reduce the sheet resistance of touch pixels 802 while also providing the material coverage benefit of the touch pixel 702 and sense connection 704 layout of Fig. 7.

However, the layout of touch screen 800 in Fig. 8 can continue to exhibit visual artifacts in some instances for two reasons. First, the differences in material coverage in sense connection 804 regions with respect to other regions can continue to cause visual artifacts on touch screen 800. Second, the horizontal orientation of region 810 between vertically-separated touch pixels 802 can contrast with the vertical orientation of substantially all of the other features on the touch screen, which can also cause visual artifacts on touch screen 800.

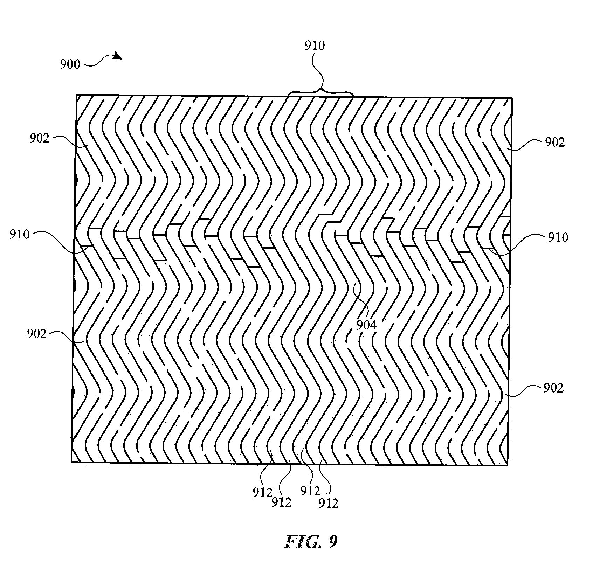

Fig. 9 illustrates a fourth modified layout of region 501 of touch screen 500 in Fig. 5 according to examples of the disclosure. The touch pixel 902 and sense connection 904 layout of Fig. 9 can be substantially that of Fig. 8. However, the width of any segment of material in Fig. 9 (whether in touch pixel 902 regions as touch pixel segments, dummy electrode 912 regions as dummy material segments, or regions 910 between touch pixels as sense connection segments) can be substantially constant across touch screen 900. Further, the width of any gap in material in Fig. 9 (whether in touch pixel 902 regions, dummy electrode 912 regions, or regions 910 between touch pixels) can be substantially constant across touch screen 900. Thus, the width of sense connection 904 segments can be substantially the same as the width of dummy material 912 segments, which can in turn be substantially the same as the width of touch pixel 902 segments. In some examples, the widths of segments and/or widths of gaps can be minimum process widths; in some examples, the widths can be below the resolution of the human eye. The distance between any point on one sense connection segment (e.g., center) and a corresponding point on another sense connection segment (e.g., center) can be referred to as sense connection segment pitch.

If thicker sense connections 904 are desired to reduce sense connection resistance, multiple segments of material can be coupled together using one or more randomly or non-randomly placed material bridges between the segments, similar to as is done within touch pixels 902. Additionally, in some examples, gaps can be inserted into dummy material 912 segments to partition the dummy material in the vertical direction (not illustrated). In this way, differences in material coverage between touch pixel 902 regions, sense connection 904 regions and dummy material 912 regions can be substantially minimized, and visual artifacts associated with such differences in material coverage can be substantially reduced.

In addition to substantially equalizing material segment width and substantially equalizing gap width across touch screen 900, in some examples, the gaps 910 between vertically-separated touch pixels 902 can be configured as illustrated to blend together the boundaries of vertically-separated touch pixels. In particular, the edges of touch pixels 902 can be defined by gaps inserted into the touch pixel segments the vertically-separated touch pixels. These gaps can be staggered (e.g., gaps in adjacent touch pixel segments can be positioned at different vertical positions) so as to reduce the appearance of any pattern of material on touch screen 900. In some examples, the gaps can be randomly staggered; in some examples, the gaps can be non-randomly staggered (e.g., staggered in a periodic pattern).

It should be noted that in any of the examples of Figs. 6-9, the shapes, layouts, configurations, edges, boundaries, gaps, grooves, or any other characteristic of the touch pixel electrodes, the dummy material, the gaps between touch pixels, and/or the sense connections can be referred to as a "pattern characteristic" of the touch pixel electrodes, the dummy material, the gaps between touch pixels, and/or the sense connections. Additionally, as stated above, any of the examples of Figs. 6-9 can be similarly extended to mutual capacitance touch screens/touch sensor panels; specifically, to the drive regions, sense regions, and/or routing or traces coupled to the drive and/or sense regions of the mutual capacitance touch screens/touch sensor panels.

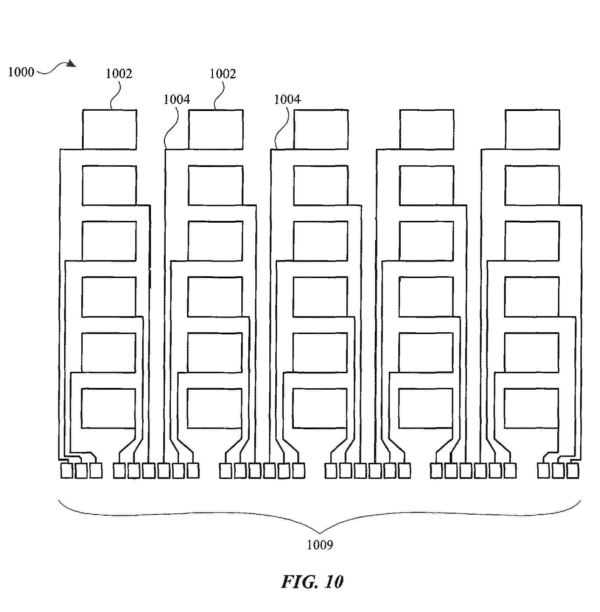

It is understood that the examples of the disclosure can be implemented in many different touch screen routing configurations. Fig. 10 illustrates another exemplary touch screen 1000 routing configuration in which the examples of the disclosure can be practiced. Touch pixels 1002 can be coupled to sense connections 1004, and sense connections 1004 can be routed to bond pads 1009, as illustrated. In some examples, sense connections 1004 can be routed directly to sense circuitry (e.g., sense channels 408); in some examples, the sense connections can be routed to bond pads 1009, which can then be electrically coupled through another connection (e.g., a flex circuit) to sense circuitry. One or more aspects of the examples disclosed above can similarly be implemented in the routing configuration of touch screen 1000.

Thus, the examples of the disclosure provide one or more configurations for reducing visual artifacts on a touch screen while maintaining acceptable electrical performance of the touch screen.

Therefore, according to the above, some examples of the disclosure are directed to a touch sensor panel comprising: a first touch pixel electrode formed in a first layer of the touch screen, the first touch pixel electrode comprising a plurality of electrically coupled touch pixel segments separated by one or more touch pixel gaps; and a sense connection formed in the first layer and coupled to the first touch pixel electrode, the sense connection configured to couple the first touch pixel electrode to sense circuitry, wherein the touch pixel segments and the touch pixel gaps are configured to provide optical uniformity on the touch sensor panel. Additionally or alternatively to one or more of the examples disclosed above, in some examples, the first touch pixel electrode comprises a self-capacitance touch pixel electrode. Additionally or alternatively to one or more of the examples disclosed above, in some examples, a shape of each touch pixel segment and a shape of each touch pixel gap substantially matches a layout of an edge of the first touch pixel electrode. Additionally or alternatively to one or more of the examples disclosed above, in some examples, the layout of the edge of the first touch pixel electrode comprises a non-linear layout. Additionally or alternatively to one or more of the examples disclosed above, in some examples, a width of each touch pixel segment is substantially equal to a width of each touch pixel gap. Additionally or alternatively to one or more of the examples disclosed above, in some examples, the touch pixel segments are electrically coupled together at a specified area on the first touch pixel electrode. Additionally or alternatively to one or more of the examples disclosed above, in some examples, the touch pixel segments are electrically coupled together via a plurality of links between touch pixel segments located at various locations across the first touch pixel electrode. Additionally or alternatively to one or more of the examples disclosed above, in some examples, the various locations across the first touch pixel electrode are random locations across the first touch pixel electrode. Additionally or alternatively to one or more of the examples disclosed above, in some examples, the touch sensor panel further comprises: a second touch pixel electrode formed in the first layer of the touch screen, the second touch pixel electrode disposed adjacent to the first touch pixel electrode; and one or more dummy material segments formed in the first layer and disposed between the first touch pixel electrode and the second touch pixel electrode, the dummy material segments having widths substantially equal to widths of the touch pixel gaps and widths of the touch pixel segments in the first touch pixel electrode. Additionally or alternatively to one or more of the examples disclosed above, in some examples, a first coverage of the first layer in the dummy material segments is substantially equal to a second coverage of the first layer in the first touch pixel. Additionally or alternatively to one or more of the examples disclosed above, in some examples, the sense connection comprises one or more sense connection segments, and the one or more sense connection segments have widths substantially equal to widths of the touch pixel segments. Additionally or alternatively to one or more of the examples disclosed above, in some examples, a boundary of the first touch pixel electrode is defined by a plurality of breaks in the plurality of touch pixel segments. Additionally or alternatively to one or more of the examples disclosed above, in some examples, the breaks in the plurality of touch pixel segments are not aligned along an axis. Additionally or alternatively to one or more of the examples disclosed above, in some examples, a first coverage of the first layer in the first touch pixel is substantially equal to a second coverage of the first layer in the sense connection. Additionally or alternatively to one or more of the examples disclosed above, in some examples, the sense connection is disposed in an active area of the touch sensor panel.

Some examples of the disclosure are directed to a touch sensor panel, comprising: a plurality of touch pixel electrodes formed in a first layer, wherein each touch pixel electrode has at least one edge having a non-linear profile; a plurality of touch pixel gaps separating the plurality of touch pixel electrodes, wherein at least one touch pixel gap has at least one edge having the non-linear profile; and a plurality of sense connections, wherein each sense connection is coupled to a touch pixel electrode, and each sense connection has at least one edge having the non-linear profile. Additionally or alternatively to one or more of the examples disclosed above, in some examples, the non-linear profile is periodic in a first direction. Additionally or alternatively to one or more of the examples disclosed above, in some examples, the touch sensor panel further comprises dummy material disposed in the touch pixel gaps, wherein the dummy material has at least one edge having the non-linear profile. Additionally or alternatively to one or more of the examples disclosed above, in some examples, each touch pixel electrode comprises a plurality of gaps having at least one edge having the non-linear profile. Additionally or alternatively to one or more of the examples disclosed above, in some examples, each of the plurality of gaps in the touch pixel electrodes is substantially the same. Additionally or alternatively to one or more of the examples disclosed above, in some examples, material coverage of the touch pixel electrodes and the sense connections is substantially equal. Additionally or alternatively to one or more of the examples disclosed above, in some examples, the touch pixel electrodes comprise a plurality of touch pixel segments having a first width, and the sense connections comprise one or more sense connection segments having a second width, the first width substantially equal to the second width.

Some examples of the disclosure are directed to a method of fabricating a touch sensor panel, the method comprising: forming a first touch pixel electrode in a first layer of the touch sensor panel, the first touch pixel electrode comprising a plurality of electrically coupled touch pixel segments separated by one or more touch pixel gaps; and forming a sense connection in the first layer, the sense connection coupled to the first touch pixel electrode and configured to couple the first touch pixel electrode to sense circuitry, wherein the touch pixel segments and the touch pixel gaps are configured to provide optical uniformity on the touch sensor panel.

Some examples of the disclosure are directed to a method of fabricating a touch sensor panel, the method comprising: forming a plurality of touch pixel electrodes in a first layer of the touch sensor panel, wherein each touch pixel electrode has at least one edge having a non-linear profile; forming a plurality of touch pixel gaps separating the plurality of touch pixel electrodes, wherein at least one touch pixel gap has at least one edge having the non-linear profile; and forming a plurality of sense connections, wherein each sense connection is coupled to a touch pixel electrode, and each sense connection has at least one edge having the non-linear profile.

Although examples of this disclosure have been fully described with reference to the accompanying drawings, it is to be noted that various changes and modifications will become apparent to those skilled in the art. Such changes and modifications are to be understood as being included within the scope of examples of this disclosure as defined by the appended claims.

## Claims

1. A touch sensor panel comprising:
a first touch pixel electrode formed in a first layer of the touch sensor panel, the first touch pixel electrode comprising a plurality of electrically coupled touch pixel segments separated by one or more touch pixel gaps; and
a sense connection formed in the first layer and coupled to the first touch pixel electrode, the sense connection configured to couple the first touch pixel electrode to sense circuitry,
wherein the touch pixel segments and the touch pixel gaps are configured to provide optical uniformity on the touch sensor panel.

2. The touch sensor panel of claim 1, wherein a shape of each touch pixel segment and a shape of each touch pixel gap substantially matches a layout of an edge of the first touch pixel electrode.

3. The touch sensor panel of claim 2, wherein the layout of the edge of the first touch pixel electrode comprises a non-linear layout.

4. The touch sensor panel of claim 1, wherein a width of each touch pixel segment is substantially equal to a width of each touch pixel gap.

5. The touch sensor panel of claim 1, wherein the touch pixel segments are electrically coupled together at a specified area on the first touch pixel electrode.

6. The touch sensor panel of claim 1, wherein the touch pixel segments are electrically coupled together via a plurality of links between touch pixel segments located at various locations across the first touch pixel electrode.

7. The touch sensor panel of claim 6, wherein the various locations across the first touch pixel electrode are random locations across the first touch pixel electrode.

8. The touch sensor panel of claim 1, further comprising:
a second touch pixel electrode formed in the first layer of the touch sensor panel, the second touch pixel electrode disposed adjacent to the first touch pixel electrode; and
one or more dummy material segments formed in the first layer and disposed between the first touch pixel electrode and the second touch pixel electrode, the dummy material segments having widths substantially equal to widths of the touch pixel gaps and widths of the touch pixel segments in the first touch pixel electrode.

9. The touch sensor panel of claim 8, wherein a first coverage of the first layer in the dummy material segments is substantially equal to a second coverage of the first layer in the first touch pixel.

10. The touch sensor panel of claim 1, wherein the sense connection comprises one or more sense connection segments, and the one or more sense connection segments have widths substantially equal to widths of the touch pixel segments.

11. The touch sensor panel of claim 1, wherein a boundary of the first touch pixel electrode is defined by a plurality of breaks in the plurality of touch pixel segments.

12. The touch sensor panel of claim 11, wherein the breaks in the plurality of touch pixel segments are not aligned along an axis.

13. The touch sensor panel of claim 1, wherein a first coverage of the first layer in the first touch pixel is substantially equal to a second coverage of the first layer in the sense connection.

14. A method of fabricating a touch sensor panel, the method comprising:
forming a first touch pixel electrode in a first layer of the touch sensor panel, the first touch pixel electrode comprising a plurality of electrically coupled touch pixel segments separated by one or more touch pixel gaps; and
forming a sense connection in the first layer, the sense connection coupled to the first touch pixel electrode and configured to couple the first touch pixel electrode to sense circuitry,
wherein the touch pixel segments and the touch pixel gaps are configured to provide optical uniformity on the touch sensor panel.
